# EUROPEAN PATENT SPECIFICATION

(11) **EP 2 626 127 B1**
(45) Date of publication and mention of the grant of the patent: **01.06.2022**
(21) Application number: 13155093.1
(22) Date of filing: 13.02.2013
(51) Int. Cl.: B01D 67/00, B01D 71/62, B01D 69/02, B01D 61/00

(54) **Polyazole membrane for water purification**
Polyazolmembran zur Wasserreinigung
Membrane à polyazole pour la purification d'eau

(30) Priority: 13.02.2012 US 201261598334 P; 24.10.2012 US 201261717928 P
(43) Date of publication of application: 14.08.2013
(73) Proprietor: King Abdullah University of Science and Technology, Thuwal 23955-6900 (SA)
(72) Inventor: Nunes, Suzana Pereira, Thuwal, 23955-6900 (SA); Maab, Husnul, Thuwal, 23955-6900 (SA); Francis, Lijo, Thuwal, 23955-6900 (SA)
(74) Representative: Ipsilon

(56) References cited:
- EP-A1- 1 427 043
- JP-A- S6 391 124
- JP-A- S52 117 285
- US-A- 4 020 142
- US-A- 4 693 824
- US-A1- 2008 152 986
- US-B2- 7 682 723
- KAI YU WANG ET AL: "Integrated forward osmosis membrane distillation (FO MD) hybrid system for the concentration of protein solutions", CHEMICAL ENGINEERING SCIENCE, OXFORD, GB, vol. 66, no. 11, 2 March 2011 (2011-03-02) , pages 2421-2430, XP028188908, ISSN: 0009-2509, DOI: 10.1016/J.CES.2011.03.001 [retrieved on 2011-03-09]
- KUMBHARKAR S C ET AL: "High performance polybenzimidazole based asymmetric hollow fibre membranes for H/COseparation", JOURNAL OF MEMBRANE SCIENCE, ELSEVIER SCIENTIFIC PUBL.COMPANY. AMSTERDAM, NL, vol. 375, no. 1, 25 March 2011 (2011-03-25), pages 231-240, XP028209278, ISSN: 0376-7388, DOI: 10.1016/J.MEMSCI.2011.03.049 [retrieved on 2011-04-06]
- CHENG-HSUN SHEN ET AL: "Phosphoric acid-doped cross-linked porous polybenzimidazole membranes for proton exchange membrane fuel cells", JOURNAL OF MATERIALS CHEMISTRY, vol. 21, no. 39, 1 September 2011 (2011-09-01), page 15660, XP055060570, ISSN: 0959-9428, DOI: 10.1039/c1jm12857d
- HUSNUL MAAB ET AL: "Synthesis and fabrication of nanostructured hydrophobic polyazole membranes for low-energy water recovery", JOURNAL OF MEMBRANE SCIENCE, vol. 423-424, 20 August 2012 (2012-08-20), pages 11-19, XP055060577, ISSN: 0376-7388, DOI: 10.1016/j.memsci.2012.07.009
- Mariela Leticia Ponce ET AL: "Stability of sulfonated polytriazole and polyoxadiazole membranes", ASIA-PACIFIC JOURNAL OF CHEMICAL ENGINEERING, vol. 5, no. 1, 1 January 2010 (2010-01-01) , pages 235-241, XP055623253, US ISSN: 1932-2135, DOI: 10.1002/apj.370
- Mohamed Khayet: "Membranes and theoretical modeling of membrane distillation: A review", Advances in Colloid and Interface Science, vol. 164, no. 1-2, 1 May 2011 (2011-05-01) , pages 56-88, XP055623426, NL ISSN: 0001-8686, DOI: 10.1016/j.cis.2010.09.005
- GOMES D ET AL: "Fluorinated polyoxadiazole for high-temperature polymer electrolyte membrane fuel cells", JOURNAL OF MEMBRANE SCIENCE, ELSEVIER BV, NL, vol. 321, no. 1, 1 August 2008 (2008-08-01), pages 114-122, XP022808143, ISSN: 0376-7388, DOI: 10.1016/J.MEMSCI.2007.11.041 [retrieved on 2007-12-04]

## Description

### CLAIM FOR PRIORITY

This application claims priority to U.S. Patent Application No. 61/598,334, filed February 13, 2012, and U.S. Patent Application 61/717,928, filed October 24, 2012.

### TECHNICAL FIELD

This invention relates to a membrane for water purification.

### BACKGROUND OF THE INVENTION

Water can be purified by passing through membranes using a variety of methods. JPS63 911424 A (Sumitomo Electric Industries) 21 Apr. 1988, describes a hollow fiber membrane comprising polyparabanic acid and a further unit (benzene-CH₂-benzene) with resistance to heat and chemicals, that is prepared by dissolving in dimethylformamide, extruding and coagulation (Abstract). Wang et al., "Integrated forward osmosis membrane distillation (FO MD) hybrid system for the concentration of protein solutions", Chemical Engineering Science, vol. 66, no. 11, 2 Mar. 2011, pp. 2421-2430, describes a polybenzimidazole hollow fiber membrane used for forward osmosis with an additional step using membrane distillation, which is prepared by dissolving the polymer in a solvent, extrusion and coagulation in water (Abstract, Table 1). Kumbharkar et al., "High performance polybenzimidazole based asymmetric hollow fiber membranes for H/CO separation", Journal of Membrane Science, vol. 375, no. 1, 25 Mar. 2011, pp. 231-240, describes a polybenzimidazole hollow fiber membrane used for gas separation, prepared by dissolving the polymer in a solvent, extrusion and coagulation in water, which polymer consists of repeating units of benzimidazole and diphenylene hexafluoropropylene (Abstract, Section 2.4, Table 1). JPS52 117285 A (Furukawa Electric Co Ltd) 1 Oct. 1977, describes a polyoxadiazole membrane used for solute separation that is prepared by dissolution in sulfuric acid, followed by coagulation in water (Abstract). Shen et al., "Phosphoric acid-doped cross-linked porous polybenzimidazole membranes for proton exchange membrane fuel cells", Journal of Materials Chemistry, vol. 21, no. 39, 1 Sept. 2011, p. 2011, describes a porous membrane for fuel cells prepared by dissolving a copolymer of benzimidazole and diphenylene hexafluoropropylene, which may be cross-lined by xylene-dichloride, casting and phase inversion by removal of solvent via drying. Maab et al., "Synthesis and fabrication of nanostructured hydrophobic polyazole membranes for low-energy water recovery", Journal of Membrane Science, vol. 423-424, 20 Aug. 2012, pp. 11-19, describes membranes for membrane distillation, which include copolymers of polyoxadiazole/polytriazole and polyether/diphenylene hexafluoroisopropylene, which copolymers are dissolved in DMF, cast or electrospun and coagulated in water. US 4 693 824 A (Sansone Michael) 15 Sept. 1987, discloses the used of polybenzimidazole membranes for reverse osmosis, ultrafiltration and treatment of saltwater (col. 2, lines 24-26, and Ex. 1). US 4 020 142 A (Davis et al.) 26 Apr. 1977, describes use of polybenzimidazole membranes, crosslinked using polybasic organic acids/acid halides, for reverse osmosis, ultrafiltration and removal of metal cations from waste water, which membranes are prepared by casting/spinning and coagulation in water (col. 8, lines 9-16). US 2008/152986 A1 (Fujibayshi) 26 Jun. 2008, describes the preparation of a polybenzimidazole membrane for a fuel cell, made by reacting polybenzimidazole and 3-glycido-propyltrimethoxysilame as a cross-linker in diacetamide, cast, heated to remove solvent, and impregnated with orthophosphoric acid (para. 44-47 and 51, and Ex. 5). US 7 682 723 B2 (Melzner et al.) 23 Mar. 2010, describes a polybenzimidazole fuel cell membrane crosslinked with tetraethoxysilane (Ex. 11). EP 1 427 043 A1 (Sekisui Chemical Co. Ltd.) 9 Jun. 2004, describes fuel cell membranes that are treated with a solution containing bis(triethoxysilyl)octane and acid and crosslinked. (Ex. 14).

### SUMMARY

In one aspect, a membrane for fluid purification including a polyazole polymer, as set forth in the claims, is described. The polymer consists of repeating units: 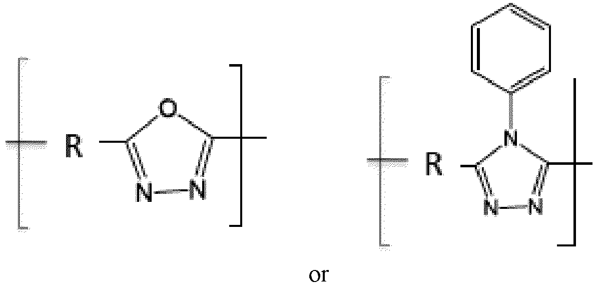 , where R is, 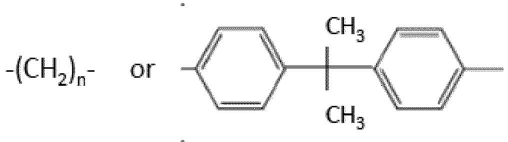 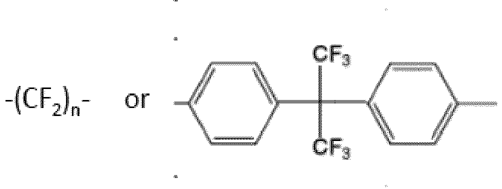 in which n is an integer from 1 - 8.

The membrane, as set forth in the claims, can be a flat sheet, hollow fiber or electrospun.

The membrane, as set forth in the claims, can be used in a system for purifying water, as set forth in the claims. For example, a method of purifying water can include passing water through the membrane.

A method of forming the membrane, as set forth in the claims, can include dissolving the polymer in an organic solvent and casting the membrane by phase inversion or electrospinning, wherein phase inversion consists of casting the polymer in a form of a flat sheet or hollow fiber and immersion in water.

Other aspects, embodiments, and features will be apparent from the following description, the drawings, and the claims.

### DETAILED DESCRIPTION OF THE DRAWINGS

Fig. 1 is a micrograph depicting a hydrophobic porous membrane prepared by phase inversion from fluorinated polyoxadiazole.
Fig. 2 is a micrograph depicting a hydrophobic porous membrane prepared by phase inversion in a hollow fiber machine from fluorinated polyoxadiazole.
Fig. 3 is a micrograph depicting a hydrophobic porous membrane prepared by electrospinning from fluorinated polyoxadiazole.

### DETAILED DESCRIPTION OF THE INVENTION

Polymers have been prepared including polyazole monomeric units, which can be used to form a porous membrane for membrane distillation. In particular, the polymers are based on polyazole polymers having hydrophobic groups. Exemplary polymers include compositions, as set forth in the claims, which consists of the repeating units: 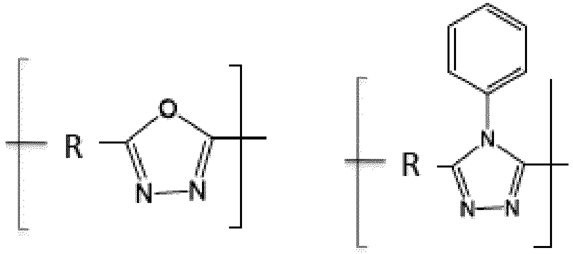 , where R is 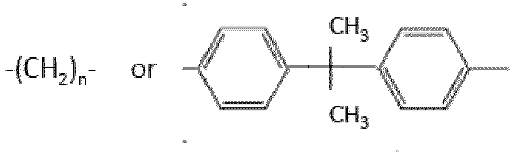 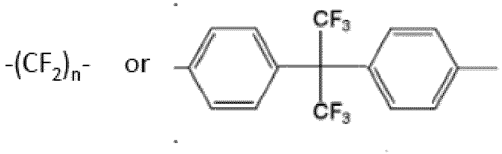 in which n is an integer from 1 - 8.

Membranes prepared from the above molecules can be stable at temperatures higher than 200 °C. The hydrophobic segments enhance the suitability of the membrane for membrane distillation.

The polymers are prepared following a known procedure for dense membranes for fuel cell application. (*See,* for example, D. Gomes, S. P. Nunes, Fluorinated polyoxadiazole for high-temperature polymer electrolyte membrane fuel cell, J. Membrane Sci. 321 (1) (2008) 114-122; M. Ponce, D. F. Gomes, S. Nunes, V. Abetz, Manufacture of a functionalized polytriazole polymer, US20080182964 A1 (2008); D. F. Gomes, J. Roeder Jesus, S. Nunes, Method for production of a sulfonated poly(1,3,4-oxadiazole) polymer, US20080318109 A1 (2008); M. L. Ponce, J. Roeder, D. Gomes and S. P. Nunes, Stability and Proton Conductivity of Sulfonated Polytriazole and Polyoxadiazole Membranes, Asia Pacific J. Chemical Engineering, 5 (1) (2010) 235-241). Other polyoxadiazoles have been reported by other authors *(See* D. F. Gomes, M. R. Loos, Method for the Synthesis of a Polyoxadiazole Polymer, US7847054 (2010); M. R. Loos, V. Abetz, K. Schulte, Polyoxadiazole Polymers, EP2241585 (A1) (2010)). The polymers can be blended, for example, with a polysulfone, a polyetherimide, one or more fluorinated additives, or have modified surfaces.

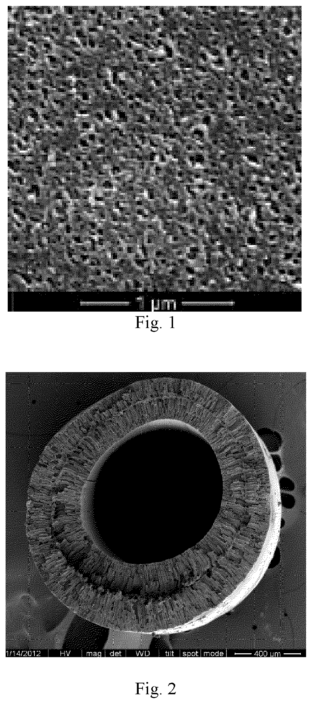

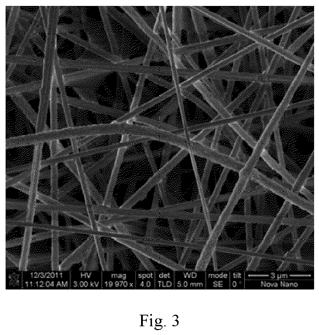

The polymers with the composition shown above are dissolved in a suitable solvent, an organic solvent (e.g., dimethylformamide, dimethylacetamide, or dimethylsulfoxide), to form a casting solution. The casting solution is used for manufacture of porous membranes by phase inversion, consisting of casting the polymer in the form of a flat sheet (as shown in Fig. 1), a hollow fiber (as shown in Fig. 2) and immersion in water or by electrospinning (as shown in Fig. 3). Porous membranes have been prepared by phase separation from polyvinylfluoride, which is not as hydrophobic as the polymers described herein.

The polymer membranes can be used in membrane distillation, which is an emerging technology for water desalination and reuse with low energy consumption. A review of this technology has been recently published, which reviews various membranes for membrane distillation, but does not include any based on polyazole. *(See* M. Khayet, Adv. Colloid Int. Sci., 164 (2011) 56). In particular, the membranes can be used for desalination or water reuse. In some circumstances, the water purification can include brine desalination. The polyazole polymer is a polyoxadiazole or polytriazole.

Advantages of the developed polymer membranes include the high thermal stability of the membranes, high hydrophobicity, and high porosity. For example, the polymer membranes can be stable at temperatures up to 300 °C. The high hydrophobicity membranes can have a high water-surface contact angle.

Other membranes for membrane distillation have been reported based on polypropylene or semicrystalline polytetrafluorethylene. *(See* M. Khayet, Adv. Colloid Int. Sci., 164 (2011) 56). These membranes have been prepared by other methods (e.g., extrusion). They are hydrophobic but do not have the high porosity achieved here. Both polypropylene and semicrystalline polytetrafluorethylene can be difficult to dissolve and generally cannot be manufactured into membranes at room temperature as the membranes described here can be. The polymers described here are much more soluble, rendering them suitable for membrane manufacture at room temperature in commercial machines, conventionally used for polysulfone and other polymers traditionally used for ultrafiltration, and other uses.

A membrane with stability in organic solvents can be achieved by the two processes described below.

The membranes prepared above can be applied to water purification containing organic solvents, as well as for purification of solutions prepared in organic solvents (organophilic ultrafiltration). The membranes can also be used as porous support for preparation of composite membranes (e.g., thin-film composite), by coating with organic solutions by a process comprising steps of washing with organic solvents. The membranes can also be used in membrane reactors, requiring operation in the presence of organic solvents and at temperatures as high as 200 °C or even higher.

Membranes have been developed that are suitable for water purification. In particular, hydrophobic membranes have been developed that are suitable for membrane distillation. Membranes have been manufactured and tested for membrane distillation.

## Claims

1. A membrane for membrane distillation comprising a polyazole polymer, wherein the polyazole polymer consists of repeating units: 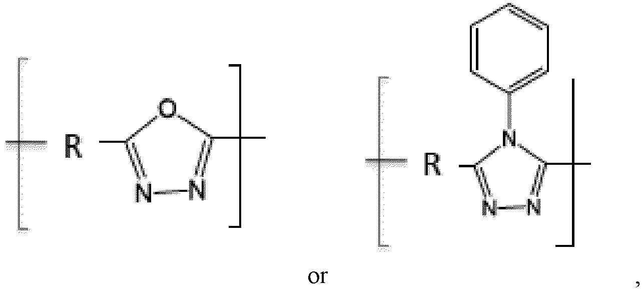 where R is a hydrophobic group, wherein the hydrophobic group is **characterized by** the following chemical structures: 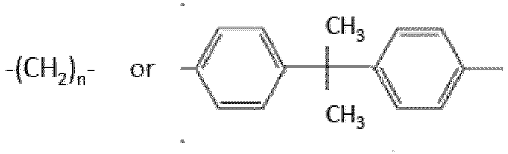 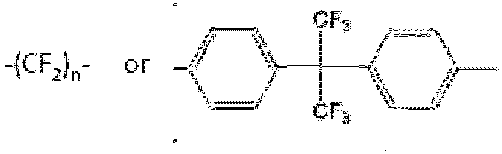 in which n is an integer from 1 to 8.

2. The membrane of claim 1, wherein the membrane is a flat sheet, hollow fiber or electrospun.

3. A system for purifying water comprising a membrane of any one of the preceding claims.

4. A method of purifying water comprising passing water through a membrane of any one of claims 1 and 2.

5. A method of forming a membrane of any one of claims 1 to 2, comprising dissolving the polymer in an organic solvent to form a casting solution and casting the membrane to form a porous membrane by phase inversion or electrospinning, wherein phase inversion consists of casting the polymer in a form of a flat sheet or hollow fiber and immersion in water.

## Patentansprüche

1. Membran zur Membrandestillation, die ein Polyazolpolymer umfasst, wobei das Polyazolpolymer aus Wiederholungseinheiten besteht: 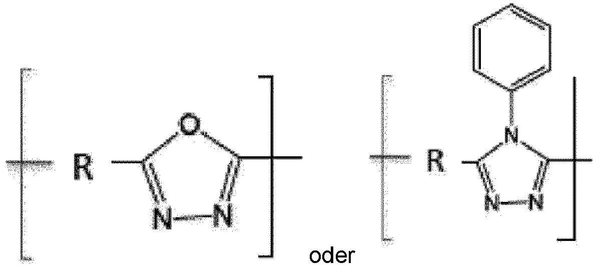 wobei R eine hydrophobe Gruppe ist, wobei die hydrophobe Gruppe durch die folgenden chemischen Strukturen gekennzeichnet ist: 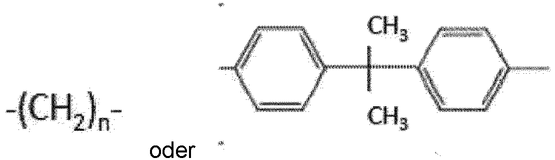 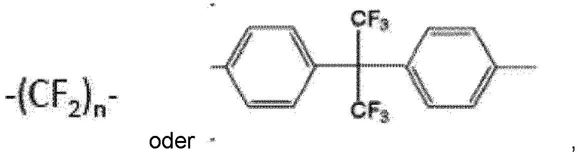 wobei n eine ganze Zahl von 1 bis 8 ist.

2. Membran nach Anspruch 1, wobei die Membran eine flache Platte, eine Hohlfaser oder elektrogesponnen ist.

3. System zum Reinigen von Wasser, das eine Membran nach einem der vorstehenden Ansprüche umfasst.

4. Verfahren zum Reinigen von Wasser, das das Leiten von Wasser durch eine Membran nach einem der Ansprüche 1 und 2 umfasst.

5. Verfahren zum Bilden einer Membran nach einem der Ansprüche 1 bis 2, das das Lösen des Polymers in einem organischen Lösungsmittel zur Bildung einer Gießlösung und das Gießen der Membran zur Bildung einer porösen Membran durch Phasenumkehr oder Elektrospinnen umfasst, wobei die Phasenumkehr aus dem Gießen des Polymers in einer Form einer flachen Platte oder Hohlfaser und das Eintauchen in Wasser umfasst.

## Revendications

1. Membrane pour distillation sur membrane comprenant un polymère de polyazole, dans laquelle le polymère de polyazole est constitué de motifs répétés : 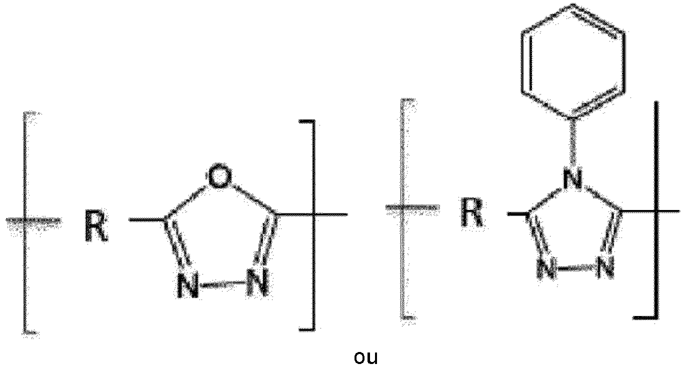 où R est un groupe hydrophobe, dans laquelle le groupe hydrophobe est **caractérisé par** les structures chimiques suivantes : 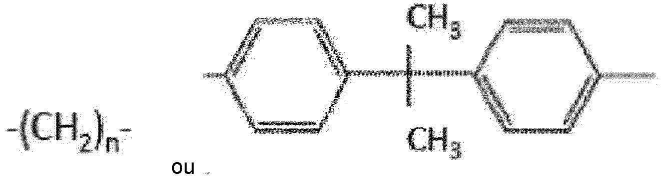 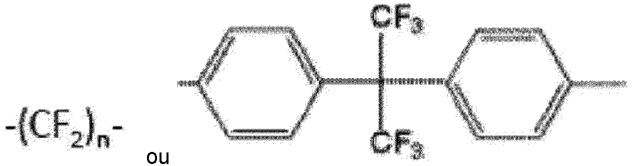 où n est un nombre entier de 1 à 8.

2. Membrane selon la revendication 1, dans laquelle la membrane est une feuille plate, une fibre creuse ou électrofilée.

3. Système de purification d'eau comprenant une membrane selon l'une quelconque des revendications précédentes.

4. Procédé de purification d'eau comprenant le passage de l'eau à travers une membrane selon l'une quelconque des revendications 1 et 2.

5. Procédé de formation d'une membrane selon l'une quelconque des revendications 1 à 2, comprenant la dissolution du polymère dans un solvant organique pour former une solution de moulage et le moulage de la membrane pour former une membrane poreuse par inversion de phase ou électrofilage, dans lequel l'inversion de phase est constituée du moulage du polymère sous une forme de feuille plate ou de fibre creuse et de l'immersion dans de l'eau.
